# EUROPEAN PATENT SPECIFICATION

(11) **EP 3 206 540 B1**
(45) Date of publication and mention of the grant of the patent: **26.12.2018**
(21) Application number: 15781696.8
(22) Date of filing: 08.10.2015
(51) Int. Cl.: A47G 27/04, B32B 5/16, B60N 3/04

(54) **UNDERLAY**
UNTERLAGE
SOUS-COUCHE

(30) Priority: 14.10.2014 US 201414514091
(43) Date of publication of application: 23.08.2017
(73) Proprietor: Instafibre Ltd, Wokingham, Berkshire RG40 4PZ (GB)
(72) Inventor: ERASMUS, Duonne, 3245 Hilton (ZA)
(74) Representative: Deans, Michael John Percy
(86) International application number: PCT/GB2015/000283
(87) International publication number: WO 2016/059360

(56) References cited:
- GB-A- 2 482 239
- US-A- 6 143 118
- US-A1- 2007 275 207

## Description

This disclosure relates to underlays, for example for floor coverings, and more particularly to crumb-rubber underlays.

Loose crumb-rubber underlays in which the crumbs are bonded to each other to form a continuous rubber matting with or without a supporting scrim layer on at least one side have been used as general purpose flooring underlays for over 40 years as they have a number of inherent properties that make them especially useful for the higher end of the market, namely:
- relatively high mass per unit volume (density), which produces a material that has a high "flop-weight";
- highly efficient acoustic insulation properties as a consequence of its relatively high density;
- the crumb-rubber particles, which make up at least 80% of the volume of the product, consist of vulcanised rubber and therefore cannot collapse over time;
- an open-cell structure resulting from bonding of the rubber granules to one another during manufacture of the product using a polyurethane or synthetic rubber binder;
- during compression of the product, the vulcanised rubber granules compress and then immediately rebound to their original shape once the pressure is released, so that the product always returns to its original shape and thickness after compression, regardless of the extent or duration of that compression;
- as compared with a solid rubber sheet, the flexible open-cell structure allows the product to be compressed relatively easily when subjected to a point load, and yet provides a firm, non-collapsing surface when subject to a distributed load;
- as compared with a solid rubber sheet, the more flexible open-cell structure allows the product readily to be rolled up into rolls which can then be packaged;
- the open-cell structure allows air to flow freely through the material, making the product more "breathable" and more hygienic at the microbial level;
- the open-cell structure allows better heat transfer through air circulation, but still has relatively good thermal insulation properties;
- the product can be flooded and then dried *in situ* without altering performance or causing odours; and
- exposed rubber granules form a surface that results in enhanced grip on most surfaces with which it comes into contact.
At the point of laying, adhesive may be applied directly to a substrate to which the underlay is then immediately adhered.

Despite these known properties and this long period of use, it appears that it was not until 2008 that any proposal was made for a crumb-rubber underlay to be manufactured with a coating of a pressure sensitive adhesive. Just such an underlay with a scrim material layer on at least one side to which a pressure sensitive adhesive is applied is proposed in ZA 2008/04310 of Rubber Lay (Pty) Ltd. No specific adhesive, nor any properties for such adhesive are suggested in ZA 2008/04310, save that the adhesive may be a pressure sensitive adhesive and may be directly applied or applied over a first coating of amorphous, high temperature, hot melt adhesive. The adhesive was disclosed in ZA 2008/04310 as being protected by a silicone release paper that could be removed by a floor-covering installer to expose the adhesive to allow the underside of the floor covering to be adhered to the exposed adhesive of the underlay.

It appears that this underlay may not have been a commercial success since Rubber Lay (Pty) Ltd went into voluntary liquidation in February 2009, only small sample volumes of their crumb-rubber underlay product having ever been produced.

The problem, glossed over in ZA 2008/04310, lies in the choice of adhesive. As will become clear from the detailed disclosure below, this problem had not been adequately solved by any specific product of Rubber Lay (Pty) Ltd.

US 2007/0275207 A1 (Higgins et al.) discloses a multi-layer carpet tile and a method of making his multilayer carpet tile. The adhesive on the exposed surface of
Higgins cannot be pressure sensitive, as the tile is assembled by heat and pressure applied across Higgins' layers. Higgins' multilayer carpet tile plainly could not be considered an underlay or used as an underlay.

US 6143118 A (Hornaman) is concerned with a particular way of applying a pressure sensitive adhesive to a porous underlayment carpet pad. The adhesive is applied as a liquid to a substrate with a release coating and dried in an oven to form a dry film. When required to be applied to the porous carpet pad, the substrate with release coating and dried adhesive film is laminated to the carpet pad, and the substrate removed leaving the dried adhesive in place on the carpet pad.

Our analysis of potential applications for underlays, both traditional flooring underlays and other applications by extension, established that there was a need for two distinct types of underlay, namely those that call for high adhesive strength (hereafter: "high-grab") for best results, and those that call for significantly lower adhesive strength (hereafter: "low-grab") for best results.

Reference may be made to Table 1 below which, in addition to distinguishing between high-grab and low-grab for use with different flooring products, also identifies whether a 3 mm or 5 mm flat product or a 6 mm ribbed product gives best results.

**Table 1**

| | | | | | | |
|---|---|---|---|---|---|---|
| | **Low Grab Products** | | | **High Grab Products** | | |
| **Installation Types by Market Segment** | **3mm Flat** | **5mm Flat** | **6mm Ribbed** | **3mm Flat** | **5mm Flat** | **6mm Ribbed** |
| **Commercial Segment** | | | | | | |
| | | | | | | |

| ***Carpet (wheeled Traffic)*** | | | | | | |
|---|---|---|---|---|---|---|
| Woven Broadloom (double stick) | | | | * | * | |
| Tufted Broadloom (double stick) | | | | * | * | |
| Tufted Tiles (double stick, no replacement) | | | | * | * | |
| Needlepunch Broadloom (double stick) | | | | * | * | |

| ***Carpet (med*/*low traffic)*** | | | | | | |
|---|---|---|---|---|---|---|
| Woven Broadloom (single stick) | | | | * | * | * |
| Woven Broadloom (double stick) | | | | * | * | |
| Tufted Broadloom (single stick) | | | | * | * | * |
| Tufted Broadloom (double stick) | | | | * | * | |
| Tufted Tiles (double stick, replacement) | * | * | | | | |
| Tufted Tiles (double stick, no replacement) | | | | * | * | |
| Needlepunch Broadloom (single stick) | | | | | * | |
| Needlepunch Broadloom (double stick) | | | | * | * | |

| ***Needlepunch carpet tiles - replacement required*** | | | | | | |
|---|---|---|---|---|---|---|
| Needlepunch tiles (backed, single stick/double stick) | * | * | | | | |

| ***Needlepunch tiles* - *no replacement*** | | | | | | |
|---|---|---|---|---|---|---|
| Needlepunch tiles (backed/unbacked, single/double stick) | | | | * | * | |

| **Residential & DIY Segments** | | | | | | |
|---|---|---|---|---|---|---|
| | | | | | | |

| ***Carpet*** | | | | | | |
|---|---|---|---|---|---|---|
| Woven & Tufted Broadloom (single stick) | | | | * | * | * |
| Tufted tiles | * | * | | * | * | |
| Needlepunch Broadloom (single stick) | | | | | * | |
| Needlepunch Broadloom (double stick) | | | | * | * | |
| Needlepunch Tiles (backed, single/double stick, replacement) | * | * | | | | |
| Needlepunch Tiles (unbacked, single/double stick) | | | | * | * | |
| | | | | | | |

| **Commercial, Residential & DIY Segments** | | | | | | |
|---|---|---|---|---|---|---|
| | | | | | | |

| ***Wood (all single stick)*** | | | | | | |
|---|---|---|---|---|---|---|
| Tongue & Groove Solid floating | | | | * | * | |
| Tongue & Groove Engineered floating | | | | * | * | |
| Double-click Engineered floating | * | * | | | | |
| Laminate | * | * | | | | |

| ***Vinyl*** | | | | | | |
|---|---|---|---|---|---|---|
| Sheeting (double stick) | | | | * | | |
| | | | | | | |
| Loose Rugs (non-slip, removable underlay) | * | | | | | |

In our British Patent Application No: 1112419.5 (published as GB2482239) we proposed a solution to this problem involving selection of a pressure sensitive adhesive with a limited range of peel adhesion that our experimental results had shown exhibited high-grab adhesive properties when applied to at least part of the exposed surface of scrim material bonded to at least one of the two sides of a layer of crumb-rubber material of an underlay, the high-grab adhesive properties enabling at least some adjustment in positioning on installation of the underlay when placement in the correct position can be easily and quickly achieved, and the flooring installation is intended to be permanent and not to require subsequent lifting. At least one sheet of scrim material was considered necessary to ensure that the crumb-rubber material would not separate or disintegrate in use, especially during the initial placement, which will almost always require minor adjustment in positioning on placement. The high-grab adhesive had, after 24 hours adhesive binding dwell-time, a 90° peel adhesion at 300 mm/minute, as measured by FINAT Test Method No. 2, of between 4.35 and 21.76 Newtons/25 mm width at room temperature (23°C ± 1° C) and at a relative humidity of 50% ± 5%.

We have now found, surprisingly, that it is possible to produce a satisfactory underlay without any scrim layer or other strengthening layer applied to the crumb-rubber layer, and with the same selected high-grab pressure-sensitive adhesive now applied directly to one surface of the crumb-rubber layer. We have found that such underlays still allow minor adjustment in positioning on installation of the underlay, despite the absence of a scrim layer or other strengthening layer applied to at least one side of the crumb-rubber layer.

In accordance with the present disclosure, we provide an underlay generally in sheet form, for a floor covering intended for permanent installation, the underlay allowing adjustment in positioning on placement into its intended position, and comprising: a layer comprising crumb-rubber material and having a first side and a second side with no scrim or other strengthening layer applied to the crumb-rubber layer on the first side thereof, and with no scrim or other strengthening layer applied to the crumb-rubber layer on the second side thereof; and a coating of a high-grab pressure sensitive adhesive applied directly to at least part of an exposed surface of at least one of said first and second sides, the high-grab adhesive being defined as an adhesive which, when used to adhere a rubber test strip 25 mm wide and 200 mm long to a glass substrate, after 24 hours adhesive binding dwell-time the force required to pull apart the test strip and glass substrate by a test rig at an angle of 90° by drawing an edge of the rubber strip perpendicularly away from the glass substrate at 300 mm/minute, at room temperature (23°C ± 1° C) and at a relative humidity of 50% ± 5%, is between 4.35 and 21.76 Newtons.

Preferred embodiments may have one or more of the following features. The crumb-rubber material suitably comprises individual crumbs of rubber bonded together by a bonding agent. The high-grab adhesive may be applied directly to at least part of the surface of the crumb-rubber material at the exposed surfaces on both the first and second sides of the crumb-rubber layer. A removable silicone-coated release sheet is adhered to the exposed adhesive surface.

Embodiments of underlay in accordance with the teachings of this disclosure are described in more detail hereinbelow by way of example only with reference to the accompanying drawings, in which:
Fig. 1 shows a somewhat schematic side elevation of a portion of an embodiment of underlay;
Fig. 2 shows a diagram illustrating a peel adhesion test employing the FINAT Test Method No: 2; and
Fig. 3 is a graph showing peel adhesion test results for test samples of adhesive applied at different coat weights, and for a comparative sample, in each case after 24 hours adhesive binding dwell-time.

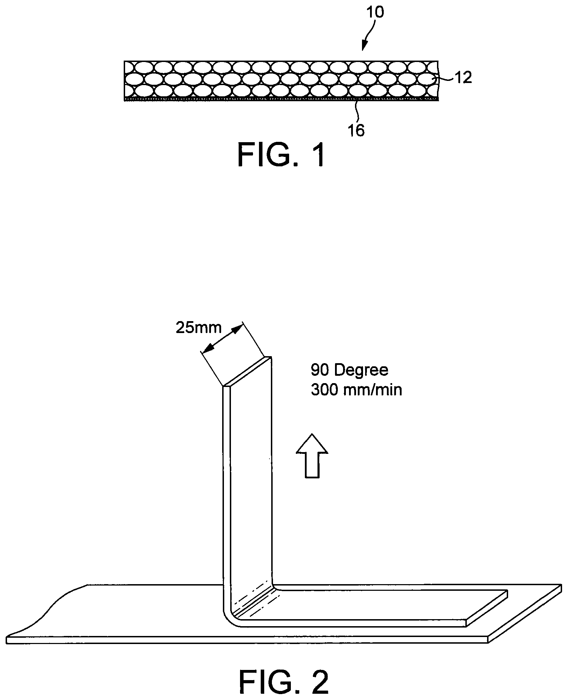

Referring first to Fig. 1, a generally sheet form underlay 10 includes a crumb-rubber layer 12 without any scrim material bonded to either surface of the crumb-rubber layer. It will be understood that, in practice, the individual crumbs of the crumb-rubber layer will not be uniform in size or exclusively oval in section.

Preferred thicknesses for different forms of flooring established by our initial analysis are set out in Table 1 above, but other thicknesses within the range of 1mm to 15mm may be used with our present scrimless underlays. For example, an 8mm product would show enhanced acoustic performance. The rubber layer may be flat with a uniform thickness across both width and length of the underlay, as shown in Fig. 1, or may be undulating with a corrugated profile on its second side, as in the 6 mm ribbed version referred to in Table 1. The crumb-rubber layer has a first side and a second side, with the two sides being generally opposite each other. In the particular embodiment illustrated in Fig. 1, a high-grab adhesive 16, as defined herein and explained in more detail below, is directly applied evenly to an exposed surface of the crumb-rubber layer. The adhesive could equally well be applied in a pattern of spots or as uniform bands or overlapping swirl-spray strands across the surface of the crumb-rubber layer.

The adhesive may additionally be applied to the other side of the crumb-rubber layer to provide a crumb-rubber layer with high-grab adhesive applied to both exposed crumb-rubber surfaces.

Prior to application of adhesive, the scrim-less product shown in Fig. 1 may be produced in conventional fashion by the steps of:
- mixing the rubber crumbs with hot polyurethane until homogeneous;
- pouring the mixture into a customized cylindrical mould and heating to about 90°C under around 1 Bar pressure until cured;
- removing the resultant cylinder from the mould and transferring it to a skiving machine in which a layer of the desired thickness, for example 8mm, is peeled from the cylinder as it rotates past a skiving blade, the resulting crumb rubber sheet being re-wound on to a storage roll.

As the materials are compressed to form the cylinder, scrim-less crumb rubber underlays tend to have a higher density and smaller voids than equivalent thickness crumb rubber underlays formed on a scrim layer. This has advantages in certain circumstances, as the underlay has a higher tensile strength. The higher density means that the underlay is less easily compressed, which is useful for installation beneath vinyl or ceramic floorcoverings where too much compression of the underlay could cause problems of indentation of vinyl products and cracking of ceramic tiles.

Although not illustrated, it will be understood that in the above embodiments, a release sheet, suitably a film coated with a silicone release layer, covers the adhesive to protect it, and is peeled off before adhering the underlay to a floor or floor covering surface by the adhesive 16.

The high-grab adhesive 16 is important for installation of the flooring types for which it is intended, in order to get superior results. The present underlays with their high-grab adhesives are employed where placement in the correct position can be easily and quickly achieved and the flooring installation is intended to be permanent and not to require subsequent lifting.

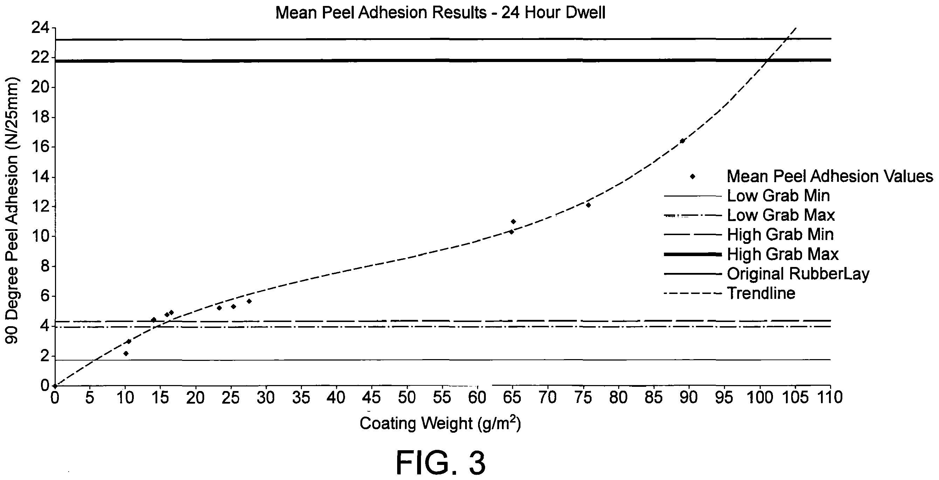

Tests for peel adhesion were performed with a number of samples using the FINAT Test Method No: 2 (as explained in more detail below). The results are set out in Table 2 (below) and Fig. 3.

Different adhesives show different characteristics, and we have established that neither choice of adhesive alone nor coat weight alone is an adequate indicator, but rather that peel adhesion is the only reliable measure of whether an adhesive present on a product in sheet form suitable for use as an underlay may be regarded as a high-grab adhesive or as a low-grab adhesive. As will be apparent from analysis of the test results explained below, the same adhesive may serve as a high-grab adhesive under some conditions and as a low-grab adhesive under others.

We achieved the test results shown in Table 2 and Fig. 3 using a commercially available adhesive, namely Unikem™ HPS 800 C, but other commercially available adhesives such as Henkel™ PD 1573 or Advanced Adhesives™ XM 2218 could equally well have been employed. The experimental data given in Table 2 and illustrated in graphical form in Fig. 3 is the mean of three replications at each coating weight of the adhesive. Peel adhesion was determined by the FINAT Test method No: 2 peel adhesion test performed after 24 hours adhesive binding dwell-time at room temperature (23°C ± 1° C) and at a relative humidity of 50% ± 5%, the temperature and humidity conditions of a typical laboratory. While the FINAT Test method No: 2 peel adhesion test performed after 20 minutes adhesive binding dwell-time can also produce results suggesting high-grab or low-grab characteristics, these results tend to be less reliable and less consistent than with the 24 hour adhesive binding dwell-time, and give spurious results with some coat weights, as a result of the much shorter adhesive binding dwell-time. Accordingly, we much prefer the FINAT Test method No: 2 peel adhesion test after 24 hours adhesive binding dwell-time as a means of differentiating between high-grab, low-grab and neither. It is generally indicative of the final peel adhesion of practical underlays.

For the present tests, adhesive coating was achieved by using a Nordson™ BM200 Drum Melter in combination with a Nordson™ MX44160 Bulk Melter and a Nordson™ BC31-4/2100 Slot Nozzle Coating Head. In the Drum Melter a heated platen is forced down by two air cylinders on to a puddle of hot melt adhesive under the platen. The hot melt flows up into a positive displacement gear pump mounted on the platen and along a heated hose to the Bulk Melter, which has three main casting assemblies, namely hopper, grid and reservoir through which the hot melt passes. The reservoir has four positive displacement pumps at which the hot melt is forced through a filter and out into a heated hose to the Slot Nozzle Coating Head. A pressure transducer and pressure control valve is fitted in each pump outlet. The Slot Nozzle Coating Head has four shut-off valves to which the heated hoses are connected, and which control the flow of adhesive into the slot nozzle. They deliver the hot melt into the internal passages designed to ensure an even coating thickness across a width selected by a set of shims. The coating weight applied to a substrate, is determined in part by the rate at which the substrate passes the coating head and by the width over which the adhesive is applied. While the coat weight applied in a production run is much easier to determine, determination of the exact coat weight applied to a sample is more difficult. For different samples, coat weight may be varied by adjusting speed of movement of the sample through the machine. Thus, in order to produce an underlay, generally in sheet form, suitable for use as an underlay with high-grab characteristics, the manufacturing process should be varied by coat weight adjustment (which may be by speed of movement of the product through the coating machinery) until samples provide results by the FINAT Test method No: 2 peel adhesion test after 24 hours adhesive binding dwell-time within the limits prescribed above.

For details of peel adhesion testing by the FINAT Test Method No: 2, reference may be made to "FINAT Technical Handbook - Test Methods", 8th Edition, published by FINAT. This test provides an industry standard test for peel adhesion, which involves the use of test strips of rubber that are 25 mm wide and 200 mm long and are adhered to a glass substrate for an adhesive binding dwell-time of either 20 minutes or 24 hours and then pulled apart on a test rig at an angle of 90° by drawing an edge of the rubber strip perpendicularly away from the glass substrate at 300 mm/minute, and measuring the force required to achieve this, as indicated schematically in Fig. 2. A wide range of test equipment is commercially available from different manufacturers to carry out these tests. The tests for the samples of Table 2 (below) and Fig. 5 were performed using a Cheminstruments™ AR-1500 Adhesion Release Tester. Another suitable tester is a JJ Lloyd LR 30K plus Tensometer. The tests were performed at room temperature (23°C ± 1° C) and at a relative humidity of 50% ± 5%, temperature and humidity conditions found in a typical test laboratory. The results after 24 hours of adhesive binding dwell-time are regarded as the ultimate values, which are unlikely to improve even after extended periods. For comparison, the same tests were performed using a sample of the original RubberLay™ material.

**Table 2**

| **Sample ID** | **Newtons/25mm after 24 Hours Adhesive Binding Dwell Time at Room Temperature (23°C +/- 1°C)** | **Coating Weight (g/m²)** |
|---|---|---|
| Low Grab Minimum | 1.77 | |
| 1 | 2.20 | 10.00 |
| 2 | 3.01 | 10.40 |
| Low Grab Maximum | 3.96 | |
| High Grab Minimum | 4.35 | |
| 3 | 4.40 | 13.97 |
| 4 | 4.46 | 14.00 |
| 5 | 4.75 | 15.84 |
| 6 | 4.89 | 16.44 |
| 7 | 5.23 | 23.20 |
| 8 | 5.33 | 25.20 |
| 9 | 5.68 | 27.52 |
| 10 | 10.27 | 64.92 |
| 11 | 10.96 | 65.20 |
| 12 | 12.09 | 75.84 |
| 13 | 16.37 | 89.20 |
| High Grab Maximum | 21.76 | |
| Original RubberLay | 23.20 | |

Fig. 3 shows the same results graphically, with a "best fit" line drawn through the data points, to which a zero coat weight point has been added, given that zero coat weight will necessarily show zero peel adhesion. There are relatively few data points at low coat weights, as it is inherently technically difficult to apply low coating weights. Even so, it will be seen that the "best-fit" line is a relatively poor fit for the first few data points. In reality, at very low coat weights, there is virtually no adhesion. Then, at a threshold coat weight, which for this particular adhesive appears to be at around 10g/m², the peel adhesion increases very rapidly with added coat weight, before leveling out with a peel adhesion of a little under 6 Newtons/25mm at a coat weight of between 20 and 30g/m² for this particular adhesive. At much higher coat weights, the rate of increase of peel adhesion with added coat weight again increases.

It transpires that it is in the region of rapid increase of peel adhesion with coat weight at lower coat weights, that the adhesive exhibits low-grab properties, while peel adhesions in the range of coat weights for which the peel adhesion levels off exhibit high-grab properties. This was established by carrying out test installations with samples of the coated underlay and different floor coverings.

We found that Sample IDs 1 and 2 allowed practical release from the floor covering. Carpet tiles could be removed from the underlay with their backing intact. Wood laminate could also be readily uplifted after installation, thereby enabling ready replacement of the floor covering. Similar release characteristics were found below rugs. The underlay could be removed from the rug and subsequently replaced. Thus Sample IDs 1 and 2 were characterized as low-grab.

However, when these same practical installation tests were repeated for Sample ID 3, when removing carpet tiles, some of the backing from the carpet tiles came away and remained on the underlay. When attempting to uplift a wood laminate, we found that it did not easily pull away. In some cases, the underlay was damaged when the laminate was removed. Accordingly, Sample ID 3 was not suitable for use where potential replacemen: of the floor covering may occur. It could not be characterized as a low-grab adhesive, and should be characterized as a high-grab adhesive at the lower end of the high-grab range.

Sample IDs 4 to 13 also exhibited high-grab characteristics.

The single sample of the original RubberLay™ material exhibited a very high peel adhesion significantly beyond that of any of our own test samples. It proved so fierce in practical installation tests that it provided no margin for any error during application, and so did not represent a practicable option even for installations requiring high-grab characteristics.

We have used the above test data to establish practical boundaries between low-grab and high-grab adhesives in terms of peel adhesion. Given that Sample ID 3 with a peel adhesion of 4.40 Newtons/25mm had been established as exhibiting high-grab characteristics, while Sample ID 2 with a peel adhesion of 3.01 Newtons/25mm worked well in installations that required a low-grab adhesive, we set the minimum boundary for high-grab adhesives at 1% below the Sample ID 3 level, namely at 4.35 Newtons/25mm, and the maximum peel adhesion for low-grab characteristics at 10% below the Sample ID 3 level, namely at 3.96 Newtons/25mm.

A minimum peel adhesion of 1.77 Newtons/25mm for a low-grab adhesive is effectively set by the practical problems in applying adhesive at very low coat weights. We were able to produce a single sample having a coat weight of 3g/m² that exhibited a peel adhesion of 1.01 Newtons/25mm. When this single sample was tested in practical installations calling for low-grab characteristics, it did not perform well, as it provided insufficient adhesion. The floor covering tended to move after application to the underlay. A practical lower limit for peel adhesion for satisfactory results can be set by taking the midpoint between this single unsatisfactory sample and Sample ID 1, which was known to have satisfactory low-grab characteristics, and adding 10%.

A practical maximum for peel adhesion for practicable high-grab characteristics can be established from the fact that Sample ID 13 with a peel adhesion of 16.37 Newtons/25mm performed well as a high-grab product, whereas the original RubberLay™ material exhibited a peel adhesion of 23.20 Newtons/25mm but was too fierce to be practicable. Accordingly, we can set a practical upper limit for high-grab peel adhesion by taking the midpoint between these figures and adding 10%, resulting in a practical upper limit of 21.76 Newtons/25mm.

The above figures for peel adhesion will determine practicable low-grab and high-grab products, regardless of the particular adhesive. Repeating the peel adhesion tests with a different adhesive, for example Henkel™ PD 1573 or Advanced Adhesives™ XM 2218, using samples having varying coat weights, would give a similar set of data points with a similar best-fit curve, but with the coat weights for the peel adhesion values required for low-grab and for high-grab being at different figures from those shown in Table 2 for Unikem™ HPS 800 C.

Thus, in order to produce an underlay, generally in sheet form, suitable for use as an underlay with high-grab characteristics, with a selected adhesive, whether one of those mentioned above or any other commercially available pressure sensitive adhesive, the manufacturing process should be varied by coat weight adjustment (which may be by speed of movement of the product through the coating machinery) until samples provide results by the FINAT Test method No: 2 peel adhesion test after 24 hours adhesive binding dwell-time that are within the limits for high-grab prescribed above.

In an alternative arrangement, as noted above, there may be high-grab adhesive applied directly to one side of the scrim-less crumb-rubber layer, with a high-grab adhesive also applied directly to the other side of the crumb-rubber layer.

## Claims

1. An underlay, generally in sheet form, for a floor covering intended for permanent installation, the underlay allowing adjustment in positioning on placement into its intended position, and comprising: a layer comprising crumb-rubber material and having a first side and a second side with no scrim or other strengthening layer applied to the crumb-rubber layer on the first side thereof, and with no scrim or other strengthening layer applied to the crumb-rubber layer on the second side thereof; and a coating of a high-grab pressure sensitive adhesive applied directly to at least part of an exposed surface of at least one of said first and second sides, the high-grab adhesive being defined as an adhesive which, when used to adhere a rubber test strip 25 mm wide and 200 mm long to a glass substrate, after 24 hours adhesive binding dwell-time the force required to pull apart the test strip and glass substrate by a test rig at an angle of 90° by drawing an edge of the rubber strip perpendicularly away from the glass substrate at 300 mm/minute, at room temperature (23°C ± 1° C) and at a relative humidity of 50% ± 5%, is between 4.35 and 21.76 Newtons.

2. An underlay according to Claim 1, wherein the crumb-rubber material comprises individual crumbs of rubber bonded together by a bonding agent.

3. An underlay according to Claim 1 or Claim 2, wherein the high-grab adhesive is applied directly to at least part of the surface of the crumb-rubber material at the exposed surfaces on both the first and second sides of the crumb-rubber layer.

4. An underlay according to any preceding Claim, further comprising a release sheet adhered to an exposed adhesive coated surface.

## Patentansprüche

1. Eine Unterlage, allgemein in Plattenform, als Bodenbelag, der für einen dauerhaften Einbau gedacht ist; die Unterlage kann in ihrer Position angepasst werden, indem sie auf dessen beabsichtigte Position angebracht wird und folgendes umfasst: eine Schicht, die Gummigranulat umfasst und eine erste Seite und eine zweite Seite hat ohne einer Gittergewebe- oder anderen Verstärkungsschicht, die am Gummigranulat auf der ersten Seite dieser Schicht angebracht ist, und ohne einer Gittergewebe- oder anderen Verstärkungsschicht, die am Gummigranulat auf der zweiten Seite dieser Schicht angebracht ist; und eine Beschichtung eines stark klebenden, druckempfindlichen Klebers, der direkt auf mindestens einen Teil einer freiliegenden Oberfläche von mindestens einer der genannten ersten und zweiten Seiten angebracht ist, wobei der stark haftender Kleber als ein Kleber definiert wird, bei dem, wenn er verwendet wird, um einen Gummiteststreifen von 25 mm Breite und 200 mm Länge auf ein Glassubstrat zu kleben, nach 24 Stunden Klebebindungs-Kontaktzeit, die erforderliche Kraft, um den Teststreifen und das Glassubstrat durch eine Prüfvorrichtung in einem Winkel von 90° auseinanderzuziehen, indem eine Ecke des Gummistreifens lotrecht vom Glassubstrat mit 300mm/Minute, bei Raumtemperatur (23°C ± 1°C) und einer relativen Feuchtigkeit von 50% ± 5% abgezogen wird, zwischen 4,35 und 21,76 Newton liegt.

2. Eine Unterlage nach Anspruch 1, wobei das Gummigranulat einzelne Gummipartikel umfasst, die durch ein Bindemittel miteinander verbunden sind.

3. Eine Unterlage nach den Ansprüchen 1 oder 2, wobei der stark haftende Kleber direkt auf mindestens einen Teil der Oberfläche des Gummigranulats auf der freiliegenden Oberfläche an sowohl der ersten als auch der zweiten Seite der Gummigranulatschicht angebracht wird.

4. Eine Unterlage nach einem der vorangegangenen Ansprüche, wobei eine abziehbare Folie an einer freiliegenden mit Kleber Beschichteten Fläche geklebt ist.

## Revendications

1. Sous-couche, généralement sous forme de feuille, pour revêtement de sol destinée à être installée de manière permanente, la sous-couche permettant un ajustement du positionnement lors de la mise en place dans sa position prévue, et comprenant : une couche comprenant un matériau de caoutchouc granulaire et ayant un premier côté et un second côté sans canevas ni autre couche de renforcement appliqué sur la couche de caoutchouc granulaire sur le premier côté de celle-ci, et sans canevas ni autre couche de renforcement appliqué sur la couche de caoutchouc granulaire sur le second côté de celle-ci ; et un revêtement d'un adhésif sensible à la pression à forte adhérence appliqué directement sur au moins une partie d'une surface exposée d'au moins un desdits premier et second côtés, l'adhésif à forte adhérence étant défini comme un adhésif qui, lorsqu'utilisé pour coller une bande test de caoutchouc de 25 mm de large et de 200 mm de long à un substrat de verre, après 24 heures de temps de repos de liaison adhésive la force requise pour détacher la bande d'essai du substrat de verre par un banc d'essai à un angle de 90° par éloignement d'un bord de la bande de caoutchouc perpendiculairement au substrat de verre à 300 mm/minute, à température ambiante (23°C ± 1°C) et à une humidité relative de 50% ± 5%, est entre 4,35 et 21,76 Newtons.

2. Produit selon la revendication 1, dans lequel le matériau de caoutchouc granulaire comprend des grains individuels de caoutchouc liés ensemble par un agent de liaison.

3. Produit selon la revendication 1 ou 2, dans lequel l'adhésif à haute adhérence est appliqué directement sur au moins une partie de la surface du matériau de caoutchouc granulaire au niveau des surfaces exposées sur les premier et second côtés de la couche de de caoutchouc granulaire.

4. Produit selon l'une quelconque des revendications précédentes, comprenant en outre une feuille détachable collée à une surface exposée recouverte d'adhésif.
